Europäisches Patentamt

European Patent Office

Office européen des brevets

(19)

(11) Veröffentlichungsnummer: **0 038 925**
**B1**

(12) **EUROPÄISCHE PATENTSCHRIFT**

(45) Veröffentlichungstag der Patentschrift:
13.02.85

(51) Int. Cl.⁴: **C 08 B 1/08**

(21) Anmeldenummer: **81101781.3**

(22) Anmeldetag: **11.03.81**

(54) **Verfahren zur Herstellung von wasserarmer Alkalicellulose.**

(30) Priorität: **19.03.80 DE 3010464**

(43) Veröffentlichungstag der Anmeldung:
**04.11.81 Patentblatt 81/44**

(45) Bekanntmachung des Hinweises auf die Patenterteilung:
**13.02.85 Patentblatt 85/7**

(84) Benannte Vertragsstaaten:
**BE DE FR NL**

(56) Entgegenhaltungen:
**Keine**

(73) Patentinhaber: **Henkel Kommanditgesellschaft auf Aktien, Postfach 1100 Henkelstrasse 67, D-4000 Düsseldorf-Holthausen (DE)**

(72) Erfinder: **Kühne, Norbert, Feuerbachstrasse 9, D-5657 Haan (DE)**
Erfinder: **Leischner, Hasso, Böcklinstrasse 10, D-4000 Düsseldorf 1 (DE)**
Erfinder: **Rähse, Wilfried, Dr., Kohlhagenstrasse 44, D-4000 Düsseldorf 13 (DE)**
Erfinder: **Wüst, Willi, Dr., Fasanenring 32, D-4030 Ratingen-Hösel (DE)**

## Beschreibung

Die vorliegende Erfindung betrifft ein Verfahren zur Herstellung von wasserarmer, besonders reaktionsfreudiger Alkalicellulose, die mit den bekannten Veretherungsmitteln zu hochwertigen Celluloseethern umgesetzt werden kann. Durch das neue Verfahren können auf einfache Weise und mit vergleichsweise geringen Rohstoffmengen hochsubstituierte Celluloseether produziert werden.

Es ist aus verschiedenen Untersuchungen bekannt, daß der relative Umsetzungsgrad der Alkalicellulose mit den Veretherungsmitteln in dem Maße zunimmt, wie das Molverhältnis Natronlauge zu Cellulose ($\mu_0$) verringert wird. Der molare Anteil an Veretherungsmittel, der im gewünschten Sinne mit der Alkalicellulose reagiert, bezogen auf das gesamte Veretherungsmittel, wird im folgenden als Selektivität bezeichnet. Die Selektivität nimmt bei Erhöhung des Molverhältnisses Natronlauge zu Cellulose ab, und zwar nach den Messungen von circa 85% bei einem $\mu_0$ von 1,5 auf etwa 35 bis 45% bei $\mu_0$-Werten von 4. Die genannten Zahlen für die Selektivität gelten sowohl für den Einsatz von Ethylenoxid als auch für Methylchlorid. Die anderen bekannten Veretherungsmittel verhalten sich im Prinzip gleich. Die starke Abnahme der Selektivität läßt sich durch die Steigerung der Wassermenge, die bei der Alkalisierung mit 50%iger Lauge eingebracht wird, erklären. Dadurch nehmen die unerwünschten Nebenreaktionen zu.

Bei der technisch weit verbreiteten Tauchalkalisierung von Cellulosebahnen und Platten wird dieser Zusammenhang durch den Abpreßgrad und durch das Tauchen in unterschiedlich konzentrierten Natronlaugen (20 bis 45%) berücksichtigt. Für die Herstellung von relativ hoch substituierte Celluloseethern muß die Alkalisierung mit 35 bis 45%iger Natronlauge erfolgen.

Die Herstellung von Alkalicellulose aus faserig-krümeliger sowie aus pulverförmiger Cellulose kann in zweiwelligen Schneckenpressen (DE-AS 15 43 114, DE-AS 15 43 136) mit 16- bis 48%iger Natronlauge beziehungsweise in einem geschlossenen Zwangsmischer, ausgestattet mit schnellaufendem Mischwerk, durch Versprühung von 50%iger Natronlauge (DE-AS 26 35 403) erfolgen. Auch bei diesen Verfahren gehen bei der Herstellung von hochsubstituierten Cellulosemischethern überproportional große Anteile von Veretherungsmittel durch die Nebenreaktionen verloren. Es ist ferner bekannt, eine Mischung aus pulvrisierter Cellulose und Ätznatron in einer Mühle herzustellen (DE-AS 14 68 226).

Aufgabe der vorliegenden Erfindung war es daher, ein Verfahren zur Herstellung von Alkalicellulose zu finden, das eine praktisch quantitative Alkalisierung erlaubt. Eine weitere Aufgabe war es, mit geringen Einsatzmolverhältnissen hohe Substitutionsgrade zu erzielen, wobei zusätzlich eine sehr gleichmäßige Substitution erreicht werden soll. Schließlich bestand die Aufgabe darin, eine hohe Produktqualität reproduzierbar zu erhalten.

Erfindungsgemäß wird nun wasserarme Alkalicellulose dadurch hergestellt, daß die zerkleinerte Cellulose in einem inerten Lösungsmittel suspendiert und dann der erste Teil des Alkalisierungsmittels in fester Form zugegeben wird und dann mit Hilfe eines organischen Lösungsmittels teilweise vorgequollen wird, gefolgt von der Alkalisierung einer 40- bis 60%igen Natronlauge.

Die gefundene Lösung der Aufgabe muß deshalb als überraschend angesehen werden, weil normalerweise der Einsatz von hochkonzentrierten Alkalilaugen zu minderwertigen Celluloseethern führt. Eine gleichmäßige und intensive Alkalisierung, die eine unabdingbare Vorraussetzung für gute Produkte darstellt, war bisher mit diesen hohen Laugenkonzentrationen nicht erreichbar. In nicht voraussehbarer Weise gelang es demnach, eine hochwertige Alkalicellulose aus höher konzentrierten Laugen unter den Voraussetzungen herzustellen, daß pulvrige beziehungsweise wollig/pulvrige Cellulose eingesetzt wird, die mit Alkohol vorgequollen wird, und daß die Alkalisierung mit zwei unterschiedlich konzentrierten Alkalisierungsmitteln erfolgt.

Für das erfindungsgemäße Verfahren wird eine handelsübliche Cellulose verwendet, die zerkleinert werden muß. Besonders geeignet ist pulvrige Cellulose mit einem mittleren Korndurchmesser zwischen 20 und 120 $\mu$, vorzugsweise jedoch zwischen 40 und 100 $\mu$. Selbstverständlich können die verschiedenartigsten Cellulosesorten eingesetzt werden, das heißt es kann sowohl pulvrige als auch weitgend fasrige Buchen- oder Fichtencellulose verwendet werden. Ferner ist der Einsatz einer fasrigen Linters-Qualität möglich.

Wesentlich für das erfindungsgemäße Verfahren ist das zweistufige Alkalisieren, das an der vorgequollenen Cellulose durchgeführt wird.

Erfindungsgemäß empfiehlt sich bei der Zweistufenalkalisierung in Suspension etwa die nachfolgend beschriebene Vorgehensweise:

Zu der im inerten Lösungsmittel, zum Beispiel Toluol, Cyclohexan, Xylol, Octan, Decan, suspendierten pulvrigen Cellulose gibt man bei Raumtemperatur den ersten Teil des Alkalisierungsmittels in Form von feinverteiltem Ätznatron oder Natriumhydroxidhydrat (100 bis 65% Na · OH). Anschließend wird zur Vorquellung eine organische Flüssigkeit, wie beispielsweise ein Alkohol, vorzugsweise Methanol oder i-Propanol, Butanol, Ethylenglykol — insbesondere niedere aliphatische Alkohole mit 1 bis 4 Kohlenstoffatomen — in Mengen von etwa 5 bis 150 Gewichtsprozent, bezogen auf die Cellulose, zugepumpt. Die zugesetzte Alkoholmenge ist abhängig von der Art und vom Verteilungsgrad der Cellulose und kann leicht durch orientierende Handversuche festgestellt werden.

Bei einer feingemahlenen KFHS-Fichtencellu-

lose (100% < 100 μ) ist der Zusatz von beispielsweise 15% Methanol ausreichend, während bei wolligem Linters 100 bis 120% notwendig sein können. Nach erfolgter Vorquellung, die nach etwa 2 bis 15 Minuten weitgehend beendet ist, wird die Restmenge an Alkalisierungsmittel in Form von etwa 40- bis 60%iger Natronlauge zugegeben. Anschließend erfolgt die Alkalisierungsreaktion bei einer Temperatur von etwa 20 bis 120°C, vorzugsweise 45 bis 80°C, in wenigen Minuten bis zu etwa einer halben Stunde.

Während der Alkalisierung finden unter Mitwirkung des Quellmittels und des vorhandenen Wassers Austauschvorgänge statt, die eine einheitliche und gleichmäßige Alkalisierung bewirken.

Das zugesetzte feste Alkalihydroxid, vorzugsweise Natriumhydroxid, löst sich während der Alkalisierung und zieht auf die Cellulose auf. Nach der Durchführung der Alkalisierung erhält man eine einheitliche, hochreaktive und zudem wasserarme Alkalicellulose, die in bekannter Weise leicht in Celluloseether überführt werden kann.

Die aus der erfindungsgemäß hergestellten Alkalicellulose produzierte Celluloseether weisen wegen der gesteigerten Selektivität für die entsprechenden Einsatzmolverhältnisse hohe Substitutionsgrade auf. Eine Verschlechterung der anderen Produktqualitätsmerkmale kann nicht festgestellt werden. Die Celluloseether lösen sich klar.

Aufgrund der gesteigerten Selektivität können die Produkte mit verringerten Mengen an Veretherungsmitteln hergestellt werden.

Eine für die Produktqualität entscheidende Bedeutung kommt dem Molverhältnis von festem, wasserfreiem Alkalihydroxid zu gelöstem Alkalihydroxid zu. Dieses Verhältnis sollte im Bereich von 0,01 bis 3,5, vorzugsweise zwischen 0,2 bis 1,0 liegen.

Die wie vorstehend beschrieben hergestellte Alkalicellulose wird anschließend in an sich bekannter Weise alkyliert. Dabei kommen sowohl diskontinuierliche als auch kontinuierliche Verfahren in Betracht. Verschiedene Schritte zur Weiterverarbeitung der Alkalicellulose bieten sich an. So besteht die Möglichkeit, die Alkalicellulose selbst oder auch eine bereits voralkylierte Form weiter mit Methylchlorid und/oder Ethylenoxid und/oder Propylenoxid zu alkylieren. Weiterhin kann man die erfindungsgemäß hergestellte Alkalicellulose selbst oder die analkylierte Form mit Chloressigsäure beziehungsweise deren Alkalisalzen weiter umsetzen. Selbstverständlich ist es möglich, auch andere bekannte Reagentien, die eine Alkylierung bewirken, mit der erfindungsgemäß erhältlichen Alkalicellulose zur Reaktion zu bringen.

Ein Merkmal der Erfindung besteht darin, daß auch mit unterstöchiometrischem Einsatz an Natronlauge eine optimale Alkalisierung erreicht wird. Bei Bezeichnung des Molverhältnisses Natronlauge zu Anhydroglucose mit $\mu_0$ ergibt sich für ein stöchiometrisches Einsatzgemisch ein Zahlenwert von 3. Bereits bei $\mu_0$-Werten von 1,5 kann eine Alkalisierung erzielt werden, die die Herstellung von guten Produkten erlaubt. Überraschenderweise zeigte sich, daß mit Absenkung des Molverhältnisses Natronlauge zu Anhydroglucose die Substitutionsausbeute (Selektivität) stark ansteigt. Während die Selektivität in den bekannten Verfahren etwa 40 bis 50% beträgt, kann sie im erfindungsgemäßen Verfahren durch Einstellen der optimalen Versuchsbedingungen auf Werte über 80% gesteigert werden. Besonders wesentlich ist hierbei die Beobachtung, daß diese Werte sowohl für Methylchlorid als auch für Alkylenoxide erreicht werden. Bei Einsatz der erfindungsgemäß hergestellten Alkalicellulose kann in der Umsetzung mit Methylchlorid auf einen Überschuß weitgehend verzichtet werden.

Die Überlegenheit der Produkte, die aus der erfindungsgemäß hergestellten Alkalicellulose synthetisiert wurden, geht beispielsweise daraus hervor, daß selbst niedrig substituierte Methylcellulose, die sonst nur in Alkalien löslich sind, sich glatt in Wasser lösen. Dieser Sachverhalt läßt auf eine sehr gleichmäßige Substitution schließen, die nur über eine völlig homogene Alkalisierung der Cellulose möglich ist. Außerdem können die derart alkalisierten Cellulosen sehr leicht gleichzeitig mischverethert werden, wobei Produkte mit interessanten Löseeigenschaften entsteht.

Die Einstellung der Viskosität ist im vorstehenden Verfahren besonders einfach. Erfindungsgemäß wird bei geringem Abbau der Viskosität die Entgasungszeit reduziert. Ein weitergehender Abbau ist durch die fehlende Entgasung und durch einen zusätzlichen thermischen Abbau der Alkalicellulose gekennzeichnet. Durch Wahl der Zeiten, Temperaturen und der Cellulosequalität ist es möglich, die Viskosität im Bereich von 20 bis 60 000 mPas einzustellen.

### Beispiel 1

80 kg feinpulvrige Fichtencellulose mit einem mittleren Teilchendurchmesser von circa 50 μ wurden bei Raumtemperatur unter Rühren in 950 l Toluol suspendiert. Im Anschluß an die Zugabe von 26 kg Ätznatron erfolgte zunächst die Entgasung der Suspension durch Sieden unter Vakuum bei etwa 75 mbar (100 Torr) und 30°C, dann die Vorquellung mit 15 kg Methanol. Der Suspension sind daraufhin 106 kg 50%ige Natronlauge zugesetzt worden. Die Alkalisierungsreaktion konnte durch eine halbstündige Umsetzung bei 70°C beendet werden. Daran schloß sich die Entfernung des Methanols und teilweise des Wassers durch azeotrope Destillation an.

Die so erhaltene Suspension von Alkalicellulose in Toluol wurde nach Zugabe von 120 kg Methylchlorid (20%iger Überschuß) und 9,7 kg Propylenoxid verethert. Die Reaktion lief nach einem Temperaturprogramm bei 60 bis 120°C in 100 Minuten in bekannter Weise ab. Die Methylhydroxypropylcellulose wies nach der Reinigung die folgenden Produkteigenschaften auf.

| Viskosität | |
|---|---|
| (2%ige Lösung, Brookfield): | 18 000 mPas |
| Trübungszahl: | 5 |
| Substitutionsgrade | |
|     Methoxyl: | 1,98 |
| Hydroxypropyl: | 0,12 |
| Selektivitäten $\sigma$ | |
|     Methoxyl: | 50% |
| Hydroxyproyl: | 34% |

### Vergleichsversuch

Bei Durchführung der Alkalisierung mit 158 kg Natronlauge (50%) (anstelle eines Gemisches aus Ätznatron und 50%iger Natronlauge) sowie der Veretherung unter sonst gleichen Bedingungen wurde nach der Reinigung ein Produkt erhalten, das bei praktisch gleicher Viskosität der wäßrigen Lösung folgende Kenndaten aufwies: Trübungszahl 7, Substitutionsgrade 1,68 beziehungsweise 0,09 und Selektivität 42 beziehungsweise 26%.

### Beispiel 2

80 kg wollig/pulvrige Fichtencellulose mit einem Teilchendurchmesser von circa 20 bis 500 µ wurden bei Raumtemperatur unter Rühren in 950 l Toluol suspendiert. Im Anschluß an die Zugabe von 12 kg Ätznatron erfolgte die Vorquellung mit 15 kg Methanol. Nach der Vorquellung sind der Suspension 75 kg 50%ige Natronlauge zugesetzt worden. Die Alkalisierungsreaktion wurde durch eine halbstündige Umsetzung bei 65°C beendet. Daran schloß sich die Entfernung des Methanols und teilweise des Wassers durch azeotrope Destillation an.

Die so erhaltene Suspension von Alkalicellulose wurde nach Zugabe von 75 kg Methylchlorid (20%iger Überschuß) und 8,7 kg Ethylenoxid umgesetzt. Die Reaktion lief nach einem Temperaturprogramm bei 60 bis 120°C in circa 100 Minuten in bekannter Weise ab. Die Methylhydroxyethylcellulose wies nach der Reinigung die folgenden Produktionseigenschaften auf.

| Viskosität | |
|---|---|
| (2%ige Lösung, Brookfield): | 230 mPas |
| Trübungszahl: | 12 |
| Substitutionsgrade | |
|     Methoxyl: | 1,61 |
| Hydroxyethyl: | 0,26 |
| Selektivitäten $\sigma$ | |
|     Methoxyl: | 64% |
| Hydroxyethyl: | 65% |

### Vergleichsversuch

Bei Durchführung der Alkalisierung mit 99 kg Natronlauge (50%) (anstelle eines Gemisches aus Ätznatron und 50%iger Natronlauge) sowie der Veretherung unter sonst gleichen Bedingungen wurde nach Reinigung ein Produkt erhalten, das bei praktisch gleicher Viskosität (270 mPas) der wäßrigen Lösung folgende Kenndaten aufwies: Trübungszahl 11, Substitutionsgrade 1,55 beziehungsweise 0,23 und Selektivität 62 beziehungsweise 58%.

### Beispiel 3

80 kg feinpulvrige Buchencellulose mit einem mittleren Teilchendurchmesser von circa 50 µ wurden in 800 kg Isopropanol (85%ig) suspendiert. Unter Rühren sind dazu 7,7 kg Ätznatron gegeben worden. Nach 10 Minuten erfolgte der Zusatz von 36 kg 50%iger Natronlauge. Die Alkalisierungsreaktion wurde durch eine anschließende halbstündige Umsetzung bei 65°C beendet.

Die so erhaltene Suspension von Alkalicellulose in Isopropanol/Wasser wurde dann mit 56 kg Natriummonochloracetat versetzt. Die Reaktion ist mit einem Temperaturprogramm zwischen 40 und 100°C in bekannter Weise zu Ende geführt worden. Das Molverhältnis bei der Umsetzung von Cellulose mit Natronlauge und Natriummonochloracetat betrug 1 : 1,3 : 1,2.

Die Aufarbeitung und Reinigung erfolgte in bekannter Weise durch Auswaschen mit 75%igem Isopropanol. Das salzfrei gewaschene Produkt zeigte die folgenden Qualitätsmerkmale:

| Viskosität: | 3200 mPas |
|---|---|
| Trübungszahl: | 4 |
| (3,5 cm Schichtdicke) | |
| Substitutionsgrad | 0,97 |

### Patentansprüche

1. Verfahren zur Herstellung von wasserarmer Alkalicellulose, dadurch gekennzeichnet, daß die zerkleinerte Cellulose in einem inerten Lösungsmittel suspendiert und dann der erste Teil des Alkalisierungsmittels in fester Form zugegeben wird und dann mit Hilfe eines organischen Lösungsmittels teilweise vorgequollen wird, gefolgt von der Alkalisierung mit einer 40- bis 60%igen Natronlauge.

2. Verfahren nach Anspruch 1, dadurch gekennzeichnet, daß fein zerkleinerte, vorzugsweise kurzfaserige oder pulvrige Cellulose aus Buche, Fichte beziehungsweise Linters eingesetzt wird.

3. Verfahren nach den Ansprüchen 1 und 2, dadurch gekennzeichnet, daß zur Vorquellung niedere aliphatische Alkohole mit 1 bis 4 Kohlenstoffatomen eingesetzt werden.

4. Verfahren nach den Ansprüchen 1 bis 3, dadurch gekennzeichnet, daß die Alkalisierung in 2 Stufen mit Natriumhydroxid vorgenommen wird.

5. Verfahren nach Anspruch 4, dadurch gekennzeichnet, daß das Molverhältnis Natriumhydroxid (fest) zu Natriumhydroxid (flüssig) 0,01 bis 3,5, vorzugsweise 0,2 bis 1,2, beträgt.

## Claims

1. A process for the production of alkali cellulose of low water content, characterized in that the size-reduced cellulose is suspended in an inert solvent, the first part of the alkalizing agent is added in solid form, after wich an organic solvent is introduced for partial presoaking, followed by alkalization with 40—60% sodium hydroxide.

2. A process as claimed in Claim 1, characterized in that finely size-reduced, preferably short-fibered or powderform cellulose from beech, pine or linters is used.

3. A process as claimed in Claims 1 and 2, characterized in that lower aliphatic alcohols containing from 1 to 4 carbon atoms are used for presoaking.

4. A process as claimed in Claims 1 to 3, characterized in that alkalization is carried out in two stages with sodium hydroxide.

5. A process as claimed in Claim 4, characterized in that the molar ratio of sodium hydroxide (solid) to sodium hydroxide (liquid) amounts to between 0.01 and 3.5 and preferably to between 0.2 and 1.2.

## Revendications

1. Procédé pour la préparation d'alcalicellulose presque sèche, caractérisé en ce que la cellulose déchiquetée est mise en suspension dans un solvant inerte et ensuite on ajoute la première partie de l'agent d'alcalinisation sous forme solide, puis on fait gonfler partiellement à l'aide d'un solvant organique, ce traitement étant suivi par l'alcalinisation avec une lessive de soude caustique à 40 à 60%.

2. Procédé suivant la revendication 1, caractérisé en ce que l'on met en oeuvre de la cellulose de hêtre, de sapin ou de linters, à courtes fibres ou pulvérulente, notamment finement dispersée.

3. Procédé suivant l'une des revendications 1 et 2, caractérisé en ce que, pour le gonflement préalable, on met en oeuvre des alcools aliphatiques inférieurs, à l à 4 atomes de carbone.

4. Procédé suivant l'une des revendications I à 3, caractérisé en ce que l'alcalinisation est réalisée en deux étapes avec de l'hydroxyde de sodium.

5. Procédé suivant la revendication 4, caractérisé en ce que le rapport moléculaire entre l'hydroxyde de sodium (solide) et l'hydroxyde de sodium (liquide) se monte de 0,01 à 3,5, de préférence de 0,2 à 1,2.